Europäisches Patentamt

European Patent Office

Office européen des brevets

(11) Publication number: **0 186 716**
**A1**

## EUROPEAN PATENT APPLICATION

(21) Application number: **84308913.7**

(22) Date of filing: **19.12.84**

(51) Int. Cl.⁴: **F 16 L 21/04**

(43) Date of publication of application: **09.07.86**
Bulletin 86/28

(84) Designated Contracting States: **AT BE CH DE FR GB IT LI LU NL SE**

(71) Applicant: **Delport, Coenraad Cornelius, 15 Narcissus Avenue, Edelweiss Springs, 1560 Transvaal (ZA)**

(72) Inventor: **Delport, Coenraad Cornelius, 15 Narcissus Avenue, Edelweiss Springs, 1560 Transvaal (ZA)**

(74) Representative: **Boon, Graham Anthony et al, Elkington and Fife High Holborn House 52/54 High Holborn, London, WC1V 6SH (GB)**

(54) **Pipe couplings.**

(57) The pipe coupling (10) comprises a pair of opposed flanges (16) each flange being adapted to be positioned generally about a pipe end (12, 14) and urged towards the other flange by suitable fastening means (18), each flange being associated with an inwardly extending flange sleeve (20), and a coupling sleeve (24) located between the flange sleeves and adapted to bridge the pipe ends, each end of the coupling sleeve and/or the inner end of the flange sleeve being adapted to receive a seal means (22) which is preferably a teflon seal.

-1 -

PIPE COUPLINGS

This invention relates to a pipe coupling. More particularly, this invention relates to a pipe coupling, a pipe coupling system, and a method of coupling pipes together.

It is known to the inventor that, especially in the chemical industry, pipes conveying corrosive liquids require to be coupled or connected, whether during construction or during maintenance (for example after corrosion or replacement of a pipe).

In such cases past practice has required either welding or threading.

It is also known to the inventor that threading of such pipes is a fairly skilled and time consuming operation, especially when it is borne in mind that such pipes are usually made of a stainless-steel type alloy.

Alternatively, welding of such pipes involves the employment of a skilled welder, the use of expensive welding electrodes and resultant high corrosion on such welded sites which corrosion is invariably higher than on the pipe material itself. It is possible with such welding that incorrect electrode usage or incorrect welding procedures can take place. Furthermore, welding slag or thread cuttings can contaminate the product or damage valves and other in-line equipment.

In the prior art, creeping or extrusion of gaskets can cause hazard and expensive leaks resulting in extensive corrosion of the environment.

In pipe lines where aggressive or corrosive chemicals, are conveyed leaks can occur at prior art joints which not only pollute the environment but also cause costly damage to the surrounding area due to corrosion and high temperature damage. The main reason for leaks is incorrect pipe material, incorrect welding rods, incorrect welding procedures, incorrect jointing systems and materials, and inexperienced staff. A further disadvantage of for example welded flange couplings are that they required the pipes to be accurately aligned.

The inventor is also aware that on welded flanges, acid or liquid tends to seep past teflon gaskets or seals which creep and permit the acid, for example to corrode the inside of flanges,and/ or permit liquid to escape.

Furthermore, the inventor is aware that for buttress ends made of glass, cast iron flanges are used which are normally coated with epoxy resin. Both these coatings as well as the cast iron flanges are attacked or corroded by certain acids.

Consequently, the prior art experiences certain problems regarding coupling of pipes whether steel-to-steel or steel-to-glass for example, and what is ideally required is therefore to provide a pipe coupling which avoids, at least partly, some if not all of the disadvantages of the prior art.

0186716

According to one aspect of the present invention there is provided a pipe coupling for coupling together two pipe ends, the coupling comprising a pair of opposed flanges, each flange being adapted to be positioned about a pipe end and urged towards the other flange by suitable fastening means, each flange being associated with an inwardly extending flange sleeve, and a coupling sleeve located between the flange sleeves and adapted to bridge the pipe ends, each end of the couplings sleeve and/or the inner end of the flange sleeve being adapted to receive a seal means.

According to another aspect of the present invention there is provided a pipe coupling for coupling together two pipe ends, the coupling comprising a pair of opposed flanges, each flange being adapted to fit over a pipe end with a sliding fit and to be urged towards the other flange by suitable fastening means, each flange being associated with an inwardly extending flange sleeve, and a coupling sleeve located between the flange sleeve and adapted to bridge the pipe ends, each end of the coupling sleeve and/or the inner end of the flange sleeve being adapted to receive a seal means.

4

Each flange and its flange sleeve may be discrete from each other.

The flange and flange sleeve may be adapted to inter engage by means of a complementary taper fit.

The flange sleeve may be adapted to accomodate variations in pipe outer dimensions.

The flange sleeve may be provided with a plurality of radially spaced apart extending slots, one of such slots optionally extending the entire length of the flange sleeve.

The pipe coupling may include a washer adapted to be provided between the flange sleeve and the seal means.

The fastening means may preferably comprise a plurality of screw threaded bolts and nuts located in a corresponding plurality of radially spaced apart openings provided in each flange.

The openings may be oversize relative to the bolts.

The seal means may be made from a suitable deformable material, which may be a non-elastic material. The

5

0186716

non-elastic material may be teflon.

Each end of the coupling sleeve may be formed to provide a chamber for receiving the seal means. The chamber may be substantially wedge-shaped such that the seal means is compacted when the flanges are urged together.

The coupling sleeve may be provided with an internal formation such that a pipe end can abut the formation.

Also according to the invention, there is provided a pipe coupling system comprising two pipe ends in combination with a pipe coupling as herein described.

The invention extends to a method of coupling together two pipe ends, including the step of providing a pipe coupling as herein described on the two pipe ends.

The invention will now be described in greater detail by way of non-limiting example, with reference to the following drawing which shows a (part) side sectional view of a pipe coupling in accordance with one form of the present invention.

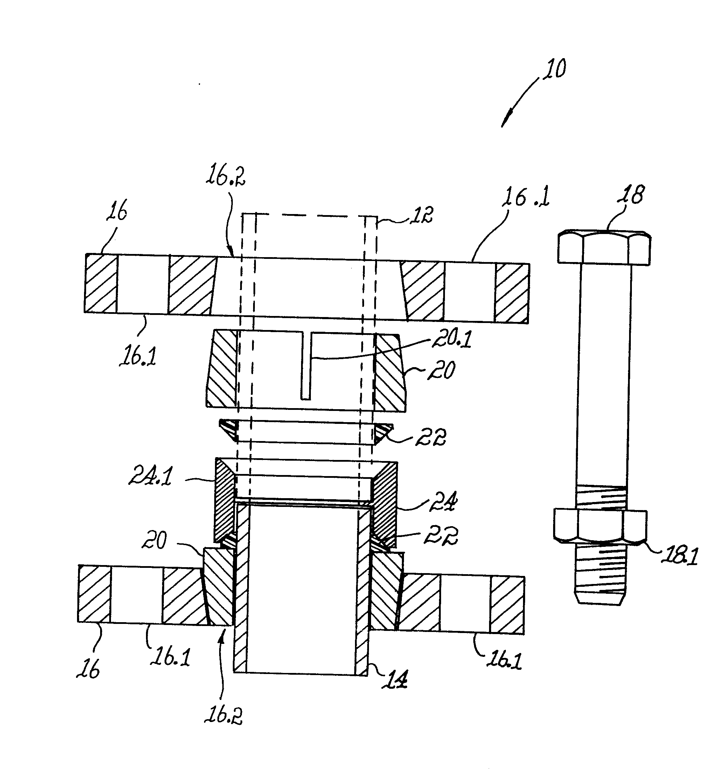

In the drawing, reference numeral 10 refers generally

6

to a pipe coupling in accordance with one embodiment of the invention.

The pipe coupling 10 is applied to two pipes namely a first pipe 12 (shown in dotted lines) and a second pipe 14, both pipes being shown only partly i.e. being generally pipe ends.

The coupling 10 comprises two opposed circular flanges 16,16 having a plurality of oversize openings 16.1 therein relative to screw-threaded bolts of which only one viz 18 and its nut 18.1 is shown.

Each flange 16 has a central round tapered opening 16.2 therein into which a complementally tapered round flange sleeve 20 can fit and which fits about the pipes 12 and 14 with a sliding fit. Each flange sleeve 20 has a plurality of radially spaced apart slots provided therein, of which only one namely 20.1 is shown. It is possible for one of such slots 20.1 to be provided throughout the entire length or height of the flange sleeve 20 (not shown) to allow for manufacturing variations in the pipe outer diameter. In such case, a suitable flat washer (not shown) can be provided between the inner end of the flange sleeve 20 and seal(discussed hereunder) in order to avoid contact

7

between such slot (extending all the way through the flange sleeve 20) and the seal 22 thereby to achieve a well sealed joint or coupling.

It is possible for each flange formed and its flange sleeve to be as a single or integral component.

A shaped teflon seal means in the form of a ring seal 22 having a wedge-like shape is provided adjacent the inner part of each flange sleeve 20, and a coupling sleeve 24 which has each end thereof suitably chamfered to accomodate the seal 22, as shown in the lower part of the drawing i.e. associated with the lower flange sleeve 20. It will be noted that the upper part of the coupling 10 is shown in an exploded form.

Although mention is made that the seal is a teflon sleeve, naturally any other suitable material may be used, as required for example a suitable elastomeric material.

The coupling sleeve 24 is seen to bridge the inner or free ends of the pipes 12 and 14 which abut an internal ring-like formation 24.1.

In use, when it is desired to couple together the pipe

8

ends of the two pipes such as 12 and 14, occasioned either by a pipe fracture or a pipe joint intended or designed as such, the pipe coupling 10 will be assembled to the pipe ends, as shown, and a plurality of bolts 18 and nuts 18.1 will be inserted through the openings 16.1 in the flanges 16. The flanges 16,16 will be secured and urged together. This action results in the flange sleeves 20 extending outwardly relative to and tapered into the opening 16.2. Simultaneously the seal 22 will be compacted into the wedge-shaped chamber formed between the inner end of each flange sleeve 20 and the chamfer provided at the outer end of the coupling sleeve 24, thereby to provide a sound seal or joint. By reason of the complemental tapers, each flange sleeve 20 will also progressively tighten about the respective pipes 12 and 14.

It will therefore be seen that no welding or threading is required for providing the coupling 10 on the ends of the pipes 12 and 14, and the coupling 10 can be fitted (and removed) readily and quickly by a relatively unskilled person.

In practice the components of the coupling 10, only the inside coupling sleeve 24 will be in contact with fluid being conveyed through the pipes 12 and 14, in addition naturally to an inner part of the teflon sleeves 22,22. Consequently, the material of the coupling sleeve 24 will generally be carefully chosen to withstand corrosion resulting from the liquid conveyed through the pipes 12 and 14.

It will be understood that the various components of the coupling 10 may generally be made from a less costly material or alloy, but may be made from one or more suitable stainless-steel alloys , not necessarily being particularly suited to the requirement demanded by the particular fluid conveyed in the pipes 12 and 14, and the temperatures and/or pressures of the particular process. Therefore it may be advantageous for the coupling sleeve 24 to be made of a special alloy for high-corrosion purposes, whilst the other components of the coupling 10 can be made from less specialised, and hence less costly steel alloys.

In practice, the inventor has found that the coupling as illustrated is capable of withstanding relatively high pressures. The use of teflon seals provides resistance to chemical and acid attack, and is otherwise generally advantageous.

Since the holes 16.1 are oversize, a certain measure of

10

0186716

malalignment of the pipes 12 and 14 is tolerated. The complimental taper joints between each flange 16 and its corresponding flange sleeve 20 also permits a certain measure of malalignment.

The particular wedge-shaped chamber as illustrated in the drawings permits compaction of the teflon seals 22 and prevents them from "creeping" and hence becoming ineffective.

The pipe coupling as shown, can be adapted to any standard flange, and to boro-silicate glassware joints with a buttress end e.g. steel to glass joints or couplings, as performed in the prior art.

When replacing corroded pipes there is no need to discard the coupling, since these couplings are re-usable and only the seals 22 need replacing. Except where very aggressive and corrosive liquids or fluids are conveyed in the pipes 12 and 14, the coupling sleeve 24, will generally not require replacement.

The inventor has found that the coupling 10 can be manufactured relatively cheaply, but its main advantage is in its ready installation (providing welding or

11

threading)    and    re-use,    where  maintenance  and
replacement costs are reduced.

Although certain embodiments only of the invention have been exemplified herein,it will be readily apparent to any person skilled in the art that other modifications and /or variations of the invention are possible. Such modifications and/or variations are therefore to be considered as falling within the spirit and scope of the present invention as defined in the appended claims.

12

CLAIMS:

1. A pipe coupling for coupling together two pipe ends, the coupling comprising a pair of opposed flanges, each flange being adapted to be positioned about a pipe end and urged towards the other flange by suitable fastening means, each flange being associated with an inwardly extending flange sleeve, and a coupling sleeve located between the flange sleeves and adapted to bridge the pipe ends, each end of the couplings sleeve and/or the inner end of the flange sleeve being adapted to receive a seal means.

2. A pipe coupling for coupling together two pipe ends, the coupling comprising a pair of opposed flanges, each flange being adapted to fit over a pipe end with a sliding fit and to be urged towards the other flange by suitable fastening means, each flange being associated with an inwardly extending flange sleeve, and a coupling sleeve located between the flange sleeve and adapted to bridge the pipe ends, each end of the coupling sleeve and/or the inner end of the flange sleeve being adapted to receive a seal means.

3. A pipe coupling as claimed in either claim 1 or claim 2, each flange and its flange sleeve being

13

0186716

discrete from each other.

4. A pipe coupling as claimed in claim 3, the flange and flange sleeve being adapted to inter engage by means of a complementary taper fit.

5. A pipe coupling as claimed in either claim 3 or claim 4, the flange sleeve being adapted to accomodate variations in pipe outer dimensions.

6. A pipe coupling as claimed in claim 5, the flange sleeve being provided with a plurality of radially spaced apart extendig slots, one of such slots optionally extending the entire length of the flange sleeve.

7. A pipe coupling as claimed in claim 6, including a washer adapted to be provided between the flange sleeve and the seal means.

8. A pipe coupling as claimed in any one of the preceding claims, the fastening means comprising a plurality of screw threaded bolts and nuts located in a corresponding plurality of radially spaced apart openings provided in each flange.

14

9. A pipe coupling as claimed in claim 8, the openings being oversize relative to the bolts.

10. A pipe coupling as claimed in any one of the preceding claims, the seal means being made from a suitable deformable material.

11. A pipe coupling as claimed in claim 10, the deformable material being a non-elastic material.

12. A pipe coupling as claimed in claim 11, wherein the non-elastic material is teflon.

13. A pipe coupling as claimed in any of the preceding claims, each end of the coupling sleeve being formed to provide a chamber for receiving the seal means.

14. A pipe coupling as claimed in claim 13, wherein the chamber is substantially wedge-shaped such that the seal means is compacted when the flanges are urged together .

15. A pipe coupling as claimed in any one of the preceding claims, the coupling sleeve being provided with an internal formation such that a pipe end can abut the formation.

0186716

16. A pipe coupling as claimed in either claim 1 or claim 2, substantially as herein described and exemplified.

17. A pipe coupling system comprising two pipe ends in combination with a pipe coupling as claimed in any one of the preceding claims.

18. A pipe coupling system as claimed in claim 17, substantially as herein described and exemplified.

19. A method of coupling together two pipe ends, including the step of providing a pipe coupling as claimed in any one of claims 1 to 16 on the two pipe ends.

20. A method as claimed in claim 19, substantially as herein described and exemplified.

10

16.2      12      16.1      18

16

16.1

20.1

20

22

24.1

24

20      22

16      16.1      16.1

16.2      14

18.1

**EUROPEAN SEARCH REPORT**

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 468 822 (LOCATELLI) <br><br> * Page 3, line 24; figure 2 * | 1-4,8-15,17,19 | F 16 L 21/04 |
| A | DE-A-2 748 429 (COUPLING SYSTEMS) <br><br> * Figures 1,7 * | 1-8,13,14,17,19 | |
| A | US-A-4 448 448 (POLLIA) <br><br> * Figures 1,2 * | 1-6,8,9,13,14,17,19 | |
| A | DE-C- 350 608 (MANNESMANNRÖHREN-WERKE) <br> * Figure 1 * | 1-6,8,17,19 | TECHNICAL FIELDS SEARCHED (Int. Cl.4) |
| A | GB-A-2 060 803 (TUNGUM HYDRAULICS) | | F 16 L 21/00 <br> F 16 L 23/00 |
| A | US-A-3 235 292 (PHILLIPS) | | |

The present search report has been drawn up for all claims

| Place of search | Date of completion of the search | Examiner |
|---|---|---|
| BERLIN | 03-07-1985 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document